# EUROPEAN PATENT SPECIFICATION

(11) **EP 2 463 546 B1**
(45) Date of publication and mention of the grant of the patent: **11.09.2019**
(21) Application number: 10425379.4
(22) Date of filing: 10.12.2010
(51) Int. Cl.: F16G 13/16, H02G 11/00

(54) **Metallic energy chain**
Metallische Energieführungskette
Chaîne métallique de transport d'énergie

(43) Date of publication of application: 13.06.2012
(73) Proprietor: Findalto S.r.l., 20052 Monza (MB) (IT)
(72) Inventor: Mauri, Giovanni, 20052 Monza (MB) (IT)
(74) Representative: Riccardi, Sergio

(56) References cited:
- US-A1- 2007 234 701

## Description

The present invention relates to an energy chain and more particularly to a side link of said energy chain and a method for manufacturing the same.

The energy chain according to the present invention provides a plurality of links in which each link comprises a pair of side links, namely a right side link and a left side link, connected to each other by a pair of crosspieces. In particular, said side links are provided with all the elements that define the relative rotation angles of two subsequent links, said elements being integrally formed with each side link. In other words, the energy chain can be simply assembled only by coupling one link to the previous link and to the consecutive link with joining member, such as a conventional pin, thus not requiring any other element to be assembled and being very easy in assemblage.

Moreover the present invention provides a method for manufacturing said link sand more particularly said side links. The manufacturing method, as described in more detail hereinafter, involves mainly a blanking operation and a die forming operation of a sheet metal thus best suiting to use of metallic materials and an inventive method to join the sheet of metal. Such method leads to a side link having a stop member and a rotation guide, such as slot, engaging stop member of previous side link integrally formed therewith.

For example, US 2007/0234701 A1 describes a method to construct a power transmission chain from a metal sideplate, said sideplate having two areas, on area having at least two or more trough-holes, and the other area bas a number of elements protruding from the plane of the sideplate also provided with holes. The method of producing and assembling the chain of US 2007/0134701 can be considered as the closest prior art; in particular, although the assembling method is quick, the final result has a great loss in resistance to wear and self-supporting. In view of the big number of through-holes and corresponding protrusions there is a loss in mechanic resistance, the holes are more sensitive to mechanical wear during use.

And more, one of the more important characteristics of a power transmission chain is, as known for a person skilled in the art, the self- supporting strength of a chain, and it appears clear that a chain formed by the single metal sideplate can be easy to be realized, but has much less self-supporting strength than a chain formed by side links composed by two sheets of metal, in respect of the chain described in the present invention.

An object of the present invention is a method to produce and assembly a chain as here described; being a veg easy method, cost effective, and a quick method to realize this chain.

Another object of the present invention is to realize a chain that lasts more, i.e. has a good resistance to wear.

A further object of the present invention is to realize a chain with a high self-supporting strength.

These and further object of the present invention are realized by the method, the side links, and finally the chain illustrated in the detailed description and recite in the annexed claims.

The present invention describes a method for manufacturing an energy chain constituted by metallic links from a conventional sheet of metal, comprising, independently from the order these steps are performed, a plurality of steps, i.e. the steps of forming rounded edges on opposite sides of said sheet metal, forming a rounded notch at one of said rounded edges, said notch having the same centre of curvature of said rounded edge, forming a concave slot between the through-holes, said slot having concavity facing the notched side of said sheet metal. In particular, said method comprises the creation of a pair of said through-hole, each hole having the same centre of curvature of said rounded edges, and two sheets of metal are joined together, forming a side link, by clinching or electro-welding them. Consequently a metallic link so realized, comprising two sheets of metal forming said side link. Therefore according to this method, and with the use of said metallic link it is realized an energy chain with the advantageous characteristic described.

It is obvious therefore that the energy chain according to the present invention allows for a cost reduction in manufacturing process and a time decrease of chain assembly operation. These and other advantages and features of the energy chain and its manufacturing method of the metallic energy chain will become more clear from the following detailed description of preferred embodiments according to the present invention, taken with reference to the annexed drawings in which:
fig. 1 is a perspective view of side link according to a preferred embodiment of the present invention;
fig. 2 is a top view of side link in fig. 1;
fig. 3 is a side view of energy chain assembled with side links shown in fig. 1 and 2;
fig. 4 is a perspective view of one element of side link in fig. 1 after blanking operation; and
fig. 5 is a perspective view of element in fig. 4 after die forming operation.

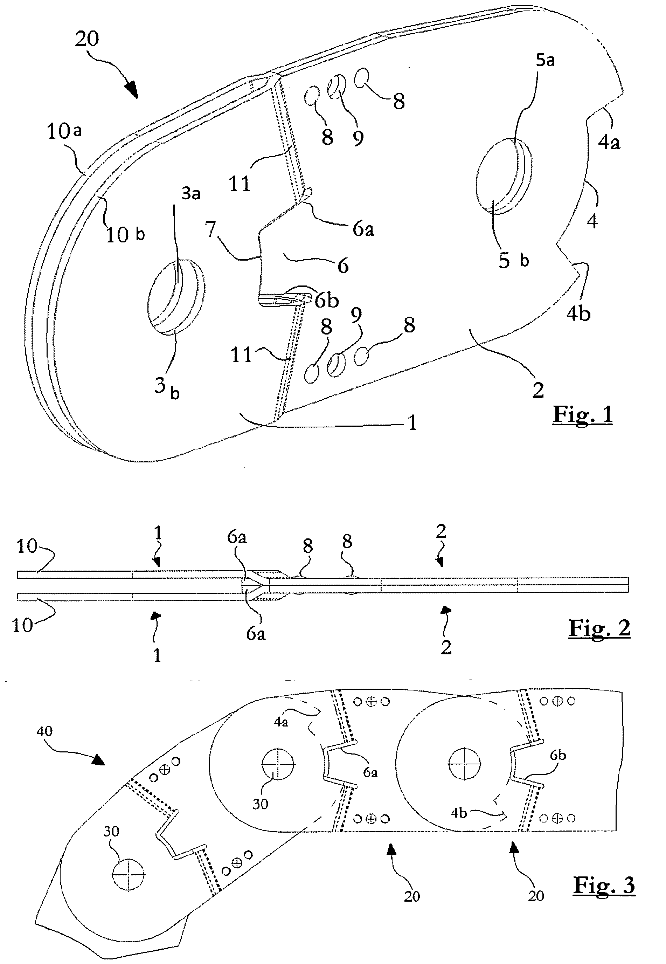

In fig. 1 a side link 20 according to a preferred embodiment of the present invention is shown being constituted by a pair of sheet metal 10. Each sheet metal 10 has two flat surfaces 1 and 2, respectively, that result parallel to each other and connected by a pair of inclined surfaces 11: the flat surfaces 1 and 2 and the inclined surfaces are formed in one-piece. In particular flat surface 1 is provided with a through-hole 3 and a recess 7which, in the preferred embodiment shown, is keystone-shaped and placed between said inclined surfaces 11. Flat surface 2 is also provided with a through-hole 5 sized as the above through-hole 3 and with a protrusion 6 being keystone-shaped or, which is the same, in a conjugated manner in respect of said recess 7. Lateral sloped sides of said protrusion 6 are referred as 6a and 6b. Moreover, flat surface 2 has a notch 4 formed at a position - in respect of the through-hole 5 - opposite to said protrusion 6: the notch 4 has a circular profile with centre of curvature coinciding to the centre of through-hole 5. The angle subtended by said circular notch 4 is defined by a pair of radial surfaces 4a and 4b having the thickness of the sheet metal 10. Both in the lower portion and upper portion of flat surface 2 there are provided indentations 8 and through-hole 9, specifically a pair of aligned indentations 8 and a through-hole 9 therebetween. As best shown in fig. 2, a side link 20 is formed by joining a pair of sheet metals 10 to each other by clinching or electro-welding them, once the corresponding flat surfaces 2 are disposed over each other such that radial surfaces 4a and 4b of one flat surface 2 are parallel to radial surfaces 4a and 4b of the other flat surface 2.

As shown in fig. 3, an energy chain 40 according to the present invention can therefore be assembled by simply connecting a plurality of the above described side links 20 by insertion of a pin 30 into the through-holes 5 of a side link 20 and through-holes 3 of next side link 20: said pin 30 can thus be fastened by riveting or screwing. Therefore the relative rotation allowed to each pair of consecutive side links 20 of the energy chain 40 is defined by notch 4 which during operation has two limit positions in which radial surface 4a of notch 4 engages lateral sloped side 6a of protrusion 6 and radial surface 4b engages lateral sloped side 6b of protrusion 6, respectively. In the first limit position two consecutive side links are aligned to each other, while in the second limit position they are at maximum rotation angle allowed.

For sake of clarity it is envisioned that each through-hole 9 provided on flat surfaces 2 it is used to connect a crosspiece (not shown) to a side link 20, a set of two crosspieces and two parallel side links 20 defining housing of cables to be driven by the whole energy chain 40.

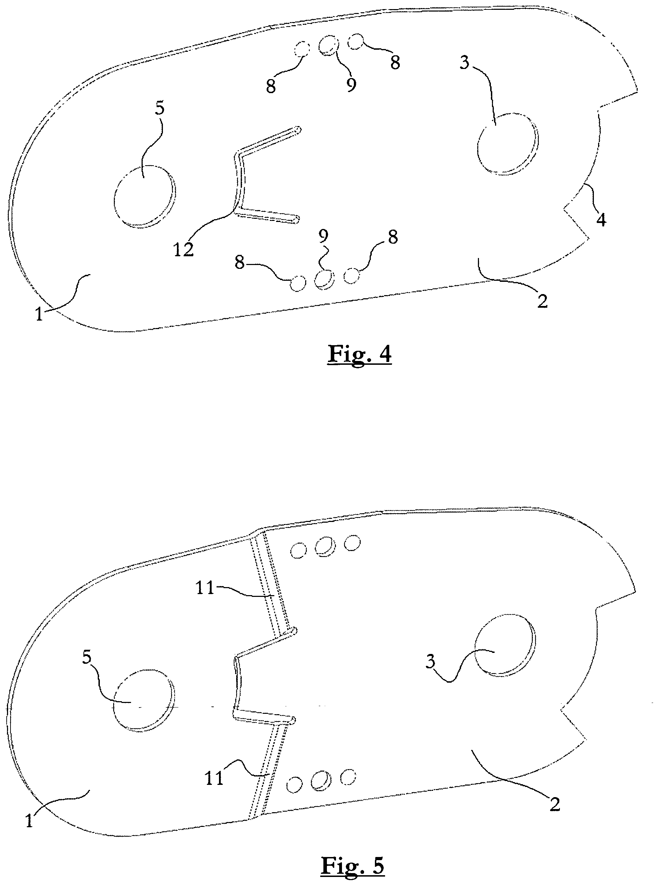

According to the invention herein disclosed and with reference to figs. 4 and 5, there is provided also a manufacturing method of the above described sheet metal 10. Such method comprises the steps of:
- providing a conventional sheet metal of desired thickness and suitable shape, such as rectangular, for example;
- blanking rounded edges on opposite sides of said sheet metal;
- perforating said sheet metal in order to obtain a pair of connection through-holes 3 and 5, crosspiece connecting through-holes 9, each holes 3 and 5 preferably having the same centre of each of curvature of said rounded edges;
- notching with a circular profile one of said rounded edge, the resulting notch 4 having the same centre of curvature of said rounded edges;
- slotting said sheet metal in order to obtain a concave slot 12 between said through-holes 3 and 5, said slot 12 having concavity facing the notched side of said sheet metal 10;
- die forming said sheet metal 10 at only one portion - for example portion 1 surrounding through-hole 5 - of the portions 1 and 2 defined to both sides of said concave slot 12, thus obtaining two parallel but no more coplanar flat surfaces 1 and 2 so that the surface 2 comprises concavity 6 of said slot 12.
- clinching or electro-welding by connecting elements, such as indentations 8, two sheet metals 10 manufactured as above and disposed with corresponding flat surfaces 2 over each other.

It is clear from the just provided description that the energy chain according to the present invention requires really simple assembly operation, since it is necessary only to join each set of two parallel side links 20 - namely right and left side links 20 - and two crosspieces connecting said parallel side links 20 by insertion of a pin 30 or the like, and there is no need of any other connection or assembly member, the stop member having been provided by the shape of the same side link 20. Moreover the method disclosed allows for an easy and really cost-effective of side link 20: nevertheless it can also be modified in the design parameters, such as, for example, profile of slot 12 or angle subtended by notch 4, all falling in the scope of the present invention as claimed below.

## Claims

1. A method for manufacturing a metallic link (20) for constituting an energy chain constituted by metallic link (20) from a pair of conventional sheet of metal (10), each sheet of metal (10) having two flat surfaces (1,2), respectively parallel to each other and connected by a pair of inclined surfaces (11), said method comprising, independently from the order these steps are performed: the steps of forming rounded edges on opposite sides of said sheets of metal (10), forming a rounded notch (4) at one of said rounded edges of each sheet of metal, said notches being defined by a pair of radial surfaces (4a, 4b), said notch having the same centre of curvature of said rounded edge, **characterized by** forming a pair of through-hole (3,5) and by forming a concave slot (12) between the through-holes (3,5) on each sheet of metal, said slot having concavity (6) facing the notched side (2) of said sheets of metal, die forming only one portion of the portions (1, 2) defined to both sides of said concave : slot on each sheet of metal, each said through-hole having the same centre of curvature of said rounded edges, and joining two sheets of metal (10) together forming a side link (20) by clinching or electro-welding them once the corresponding flat surfaces (2) are disposed over each other such that radial surfaces (4a, 4b) of one flat surface (2) are parallel to radial surfaces (4a, 4b) of the other flat surface (2).

2. The manufacturing method according to claim 1, in which after die forming said portions are parallel but no more co-planar.

3. The manufacturing method according to claim 1, in which said rounded edges are formed by blanking.

4. The manufacturing method according to claim 1, in which said through-holes are formed by perforating.

5. The manufacturing method according to claim 1, in which said concave slot is formed by slotting.

6. The manufacturing method according to claim 1, in which said notch is formed by notching.

7. The manufacturing method according to claim 1, in which the die formed portion is the portion not containing said notch.

8. The manufacturing method according to claim 1, in which said concave slot has an axis of symmetry.

9. The manufacturing method according to claim 8, in which said axis of symmetry lies on the distance between centers of said through-holes.

10. The manufacturing method according to claim 8, in which said slot is keystone-shaped.

11. A metallic link (20) manufactured according to the method of the preceding claims, **characterized by** comprising two sheet of metal (10) forming said side link (20).

12. A metallic link (20) according to claim 11 where said side link having a couple of through-holes (3a 3b, 5a, 5b) in each sheet of metal (10) and said though-holes (3a,5a) of the one sheet of metal (10a) coupling with the through-holes (3b,5b) of the at least second sheet of metal (10b).

13. An energy chain realized by assembling a plurality of metallic link (20) according to claims 11 to 12.

## Patentansprüche

1. Verfahren zur Herstellung eines Metallglieds (20) für eine aus Metallgliedern (20) bestehenden Energieführungskette, wobei das Glied ein Paar herkömmliche Metallfolien (10) enthält und jede Metallfolie (10) zwei einander parallele bzw. durch ein Paar schräge Flächen (11) verbundene Planflächen (1,2) aufweist, worin dieses Verfahren, unabhängig von der Ausführungsordnung, die folgenden Schritte enthält: Formen von Rundkanten auf gegenüberliegenden Seiten der Metallfolien (10); Formen je einer Rundnut an einer der Rundkanten jeder Metallfolie, wobei diese Nuten von einem Paar Radialflächen (4a, 4b) bestimmt werden und den selben Krümmungsmittelpunkt der besagten Rundkanten aufweisen, **gekennzeichnet durch** die folgenden Schritte: Formen eines Paares Durchgangslöcher (3, 5) sowie eines konkaven Schlitzes (12) zwischen den Durchgangslöchern (3, 5) auf jeder Metallfolie, wobei diese Schlitzkonkavität (6) nach der gekerbten Seite (2) der Metallfolien gewandt ist; Formpressen nur eines Teils der Flächen (1,2) an beiden Seiten des konkaven Schlitzes auf jeder Metallfolie, wobei jedes Durchgangsloch den selben Krümmungsmittelpunkt der Rundkanten aufweist; und Zusammenfügen der beiden Metallfolien (10), indem ein Seitenglied (20) durch Falzen bzw. Elektroschweissen erzeugt wird, als die entsprechenden Planflächen (2) derart übereinandergelegt werden, dass die Radialflächen (4a, 4b) der einen Planfläche (2) parallel an den Radialflächen (4a,4b) der anderen Planfläche angeordnet sind.

2. Herstellungsverfahren nach Anspruch 1, worin die besagten Teile nach dem Formpressen parallel aber nicht mehr komplanar angeordnet sind.

3. Herstellungsverfahren nach Anspruch 1, worin die besagten Rundkanten durch Stanzen erzeugt werden.

4. Herstellungsverfahren nach Anspruch 1, worin die besagten Durchgangslöcher durch Mehrfachbohren erzeugt werden.

5. Herstellungsverfahren nach Anspruch 1, worin der konkave Schlitz durch Stanzen erzeugt wird.

6. Herstellungsverfahren nach Anspruch 1, worin die besagte Rundnut durch Einkerbung erzeugt wird.

7. Herstellungsverfahren nach Anspruch 1, worin das formgepresste Teil aus dem die Rundnut nicht enthaltenden Teil besteht.

8. Herstellungsverfahren nach Anspruch 1, worin der konkave Schlitz eine Symmetrieachse aufweist.

9. Herstellungsverfahren nach Anspruch 8, worin die besagte Symmetrieachse am Achsabstand der besagten Durchgangslöcher liegt.

10. Herstellungsverfahren nach Anspruch 8, worin der besagte konkave Schlitz als Schluss-Stein ausgestaltet wird.

11. Metallglied (20) hergestellt nach dem Verfahren der vorhergehenden Ansprüche, **dadurch gekennzeichnet, dass** es zwei das besagte Seitenglied (20) bildende Metallfolien (10) enthält.

12. Metallglied (20) nach Anspruch 11, worin das besagte Seitenglied je ein Paar Durchgangslöcher (3a, 3b, 5a, 5b) an jeder Metallfolie (10) aufweist, und die Durchgangslöcher (3a, 5a) der ersten Metallfolie (10a) mit den Durchgangslöchern (3b, 5b) der mindestens zweiten Metallfolie (10b) zusammenpassen.

13. Energieführungskette, die durch Zusammensetzung einer Anzahl von Metallgliedern (20) nach den Ansprüchen 11 und/oder 12 erzeugt wird.

## Revendications

1. Procédé de fabrication d'un maillon métallique (20) pour une chaîne de transport d'énergie formée par maillons métalliques (20), à partir d'une paire de feuilles de métal conventionnelles (10), chaque feuille de métal (10) ayant deux surfaces planes (1, 2) respectivement parallèles et jointes par une paire de surfaces inclinées (11), le dit procédé comprenant les phases, indépendamment de l'ordre avec lequel les phases sont exécutées, de former des bords arrondis sur des côtés opposés des feuilles de métal (10) ; former une entaille arrondie en correspondance avec un des dits bords arrondis de chaque feuille de métal, les dites entailles étant définies par une paire de surfaces radiales (4a, 4b), la dite entaille ayant le même centre de courbure du dit bord arrondi ; **caractérisé par** les phases de former une paire de trous passants (3,5) et former une fente concave (12) entre les trous passants (3,5) sur chaque feuille de métal ; la dite fente ayant une concavité (6) tournée vers le côté entaillé (2) des feuilles de métal ; estamper seulement une partie des surfaces (1,2) définies aux deux côtés de la fente concave sur chaque feuille de métal, chaque trou passant ayant le même centre de courbure des dits bords arrondis ; et joindre ensemble les deux feuilles de métal, en formant un maillon latéral (20) par leur agrafage ou électrosoudage, lorsque les surfaces planes correspondantes (2) sont superposées entre eux, de sorte que les surfaces radiales (4a, 4b) d'une surface plane (2) sont parallèles aux surfaces radiales (4a, 4b) de l'autre surface plane.

2. Procédé de fabrication selon la revendication 1, dont après l'estampage les dites parties sont parallèles mais pas plus coplanaires.

3. Procédé de fabrication selon la revendication 1, dont les dits bords arrondis sont formés par cisaillage.

4. Procédé de fabrication selon la revendication 1, dont les dits trous passants sont formés par forage multiple.

5. Procédé de fabrication selon la revendication 1, dont la dite fente concave est formée par cisaillage.

6. Procédé de fabrication selon la revendication 1, dont la dite entaille est formée par entaillage.

7. Procédé de fabrication selon la revendication 1, dont la partie estampée est la partie qui ne contient pas la dite entaille.

8. Procédé de fabrication selon la revendication 1, dont la dite fente concave a un axe de symétrie.

9. Procédé de fabrication selon la revendication 8, dont le dit axe de symétrie est placé sur l'entraxe des dits trous passants.

10. Procédé de fabrication selon la revendication 8, dont la dite fente est formée comme une clé de voûte.

11. Maillon métallique (20) fabriqué selon le procédé des revendications précédentes, **caractérisé en ce qu'**il comprend deux feuilles de métal (10) en formant le dit maillon latéral (20).

12. Maillon métallique (20) selon la revendication 11, dont le dit maillon latéral a une paire de trous passants (3a, 3b, 5a, 5b) dans chaque feuille de métal (10), et les trous passants (3a, 5a) de la première feuille de métal (10a) sont accouplés avec les trous passants (3b, 5b) de la au moins deuxième feuille de métal (10b).

13. Chaîne de transport d'énergie produite en assemblant une pluralité des maillons métalliques (20) selon les revendications 11 et/ou 12.
